# FASCICULE DE BREVET EUROPEEN

(11) **EP 3 262 283 B1**
(45) Date de publication et mention de la délivrance du brevet: **15.04.2020**
(21) Numéro de dépôt: 16713525.0
(22) Date de dépôt: 23.02.2016
(51) Int. Cl.: F01D 25/18, F16C 33/10

(54) **PALIER HYDRODYNAMIQUE**
HYDRODYNAMISCHES LAGER
HYDRODYNAMIC BEARING

(30) Priorité: 24.02.2015 FR 1551550
(43) Date de publication de la demande: 03.01.2018
(73) Titulaire: Safran Transmission Systems, 92700 Colombes (FR)
(72) Inventeur: BAUDUIN, Lionel, 77550 Moissy-Cramayel Cedex (FR); GUILLEMONT, Maxence, 77550 Moissy-Cramayel Cedex (FR); MORELLI, Boris, 77550 Moissy-Cramayel Cedex (FR); VIEL, Julien, 77550 Moissy-Cramayel Cedex (FR)
(74) Mandataire: Brevalex
(86) Numéro de dépôt international: PCT/FR2016/050415
(87) Numéro de publication internationale: WO 2016/135413

(56) Documents cités:
- EP-A1- 0 006 095
- DE-A1- 3 730 916
- FR-A1- 2 431 028
- US-A- 3 964 805

## Description

### DOMAINE TECHNIQUE

La présente invention se rapporte au domaine des paliers hydrodynamiques, notamment pour les turbomachines d'aéronef.

### ÉTAT DE LA TECHNIQUE ANTÉRIEURE

Un palier hydrodynamique, destiné au guidage d'un arbre en rotation par rapport à un support, comprend en général une paroi annulaire externe de palier solidaire du support, et une paroi annulaire interne de palier solidaire de l'arbre et s'étendant en regard de la paroi annulaire externe de palier de manière à ménager un espace annulaire entre les parois annulaires interne et externe de palier. De plus, la paroi annulaire externe de palier comporte au moins un orifice d'alimentation en lubrifiant, destiné à alimenter l'espace annulaire en lubrifiant sous pression pour former un film fluide de portance entre les parois annulaires interne et externe de palier. Le document EP 0 006 095 A1 décrit un palier hydrodynamique selon l'état de la technique.

Toutefois, en cas d'insuffisance ou de défaillance de l'alimentation en lubrifiant, le palier risque d'entrer dans un mode de fonctionnement dit « régime sec » dans lequel les parois annulaires interne et externe de palier risquent d'entrer en contact l'une avec l'autre et de provoquer un endommagement du palier.

Ce type de situation se rencontre notamment dans les turbomachines utilisées pour la propulsion des aéronefs.

En effet, dans une telle turbomachine, le lubrifiant est en général fourni par une pompe entraînée par un rotor de la turbomachine. A cet effet, la pompe est typiquement accouplée à un boîtier de commande d'accessoires, parfois dénommé *AGB* (de l'anglais *« Accessory Gear Box* »), lui-même accouplé au rotor.

Au démarrage de la turbomachine, le régime de la pompe peut se révéler insuffisant pour assurer un débit de lubrifiant satisfaisant au sein de l'espace annulaire entre les parois annulaires interne et externe de palier.

Cela est particulièrement le cas en ce qui concerne un palier hydrodynamique supportant un arbre appartenant au boîtier de commande d'accessoires, étant donné qu'un tel arbre est particulièrement sollicité lors du démarrage de la turbomachine. Un tel démarrage peut en effet être accompli au moyen d'un démarreur connecté au boîtier de commande d'accessoires, et entraînant donc le rotor de la turbomachine en rotation par l'intermédiaire de l'arbre précité.

### EXPOSÉ DE L'INVENTION

L'invention est définie par un palier hydrodynamique selon la revendication 1 et un procédé de lubrification d'un palier hydrodynamique selon la revendication 10 et a notamment pour but d'apporter une solution simple, économique et efficace à ce problème.

Elle propose à cet effet un palier hydrodynamique destiné au guidage d'un arbre en rotation autour d'un axe longitudinal défini par rapport à un support, dans lequel le palier hydrodynamique comprend une paroi annulaire externe de palier fixe, ainsi qu'une paroi annulaire interne de palier rotative s'étendant en regard de la paroi annulaire externe de palier de manière à ménager un espace annulaire entre les parois annulaires interne et externe de palier. De plus, la paroi annulaire externe de palier comporte au moins un orifice d'alimentation en lubrifiant destiné à alimenter ledit espace annulaire en lubrifiant sous pression pour former un film fluide de portance.

Selon l'invention, l'ensemble comprend une cavité délimitée extérieurement par la paroi annulaire interne de palier et délimitée axialement par deux parois annulaires transversales solidaires de la paroi annulaire interne de palier et agencées de part et d'autre de la cavité, et la paroi annulaire interne de palier comporte des moyens de raccordement fluidique qui mettent la cavité en communication fluidique avec ledit espace annulaire. De plus, la cavité est ménagée de façon à constituer une réserve de lubrifiant pour une phase de fonctionnement en régime transitoire.

En régime établi, l'arbre est entraîné en rotation, et le circuit de lubrification fournit du lubrifiant sous pression dans l'espace annulaire par l'intermédiaire de chaque orifice d'alimentation en lubrifiant. Une partie du lubrifiant pénètre alors dans la cavité précitée, au travers desdits moyens de raccordement fluidique.

Lorsque l'arbre s'arrête de tourner, la cavité constitue ainsi une réserve de lubrifiant. La quantité de lubrifiant pouvant être stockée dans la cavité varie en fonction de la position angulaire et de l'inclinaison de l'arbre.

Lors d'une mise en rotation ultérieure de l'arbre, si le circuit de lubrification tarde à assurer l'alimentation de l'espace annulaire en lubrifiant par l'intermédiaire de chaque orifice d'alimentation en lubrifiant, le lubrifiant éventuellement stocké dans la cavité est éjecté progressivement par les moyens de raccordement fluidique jusque dans ledit espace annulaire, sous l'effet de la force centrifuge. Ce lubrifiant provenant de la cavité permet de former une fine couche de lubrifiant entre la paroi annulaire externe de palier et la paroi annulaire interne de palier, permettant au palier hydrodynamique de fonctionner au moins dans un régime dit « onctueux ».

Le même phénomène se produit dans tout autre type de régime transitoire caractérisé par une défaillance de l'alimentation en lubrifiant sous pression.

D'une manière générale, le grippage du palier hydrodynamique peut ainsi être évité.

Sous l'aspect le plus général de l'invention, il se peut que certaines positions particulières de l'arbre ne permettent pas la rétention de lubrifiant dans la cavité. Néanmoins, l'invention permet que dans la plupart des situations, une quantité de lubrifiant, suffisante pour un fonctionnement en régime « onctueux » du palier hydrodynamique, puisse être stockée dans la cavité.

Les moyens de raccordement fluidique comprennent de préférence une pluralité d'orifices de passage de lubrifiant qui traversent la paroi annulaire interne de palier et qui sont régulièrement répartis autour de l'axe longitudinal.

Une telle configuration permet d'optimiser l'équilibrage en rotation de l'arbre.

Par ailleurs, le palier hydrodynamique comprend avantageusement une bague montée de manière amovible sur l'arbre et intégrant ladite paroi annulaire interne de palier ainsi que lesdites parois annulaires transversales.

En outre, la cavité peut être délimitée intérieurement par une surface pleine de l'arbre.

En variante, la bague peut comprendre une paroi annulaire interne de bague qui délimite intérieurement la cavité.

En variante encore, la paroi annulaire interne de palier et les parois annulaires transversales peuvent être intégrées à l'arbre.

Par ailleurs, le palier hydrodynamique comprend selon l'invention des moyens de partitionnement raccordés à la paroi annulaire interne de palier de manière à partager la cavité en plusieurs compartiments, les moyens de partitionnement formant obstacle à un écoulement de lubrifiant contenu dans au moins l'un des compartiments sous l'effet de la gravité, en direction des moyens de raccordement fluidique, quelle que soit la position angulaire de l'arbre lorsque l'arbre est à l'arrêt.

Les moyens de partitionnement permettent ainsi d'assurer que du lubrifiant puisse être stocké dans la cavité quelle que soit la position angulaire de l'arbre lorsque ce dernier est à l'arrêt.

Dans un premier mode de réalisation préféré de l'invention, les moyens de partitionnement comprennent une paroi de partitionnement de forme annulaire partageant la cavité en deux compartiments agencés l'un derrière l'autre le long de l'axe longitudinal. De plus, la paroi de partitionnement comporte au moins une ouverture délimitée par la paroi annulaire interne de palier et décalée circonférentiellement par rapport aux moyens de raccordement fluidique.

Chaque ouverture permet la circulation de lubrifiant entre les deux compartiments de la cavité lorsque l'arbre est entraîné en rotation, et permet ainsi à tout le lubrifiant présent dans la cavité d'atteindre les moyens de raccordement fluidique.

La paroi de partitionnement s'étend de préférence transversalement par rapport à l'axe longitudinal.

Ladite au moins une ouverture consiste avantageusement en une pluralité d'ouvertures régulièrement réparties autour de l'axe longitudinal.

Une telle configuration permet également d'optimiser l'équilibrage en rotation de l'arbre.

Dans un deuxième mode de réalisation préféré de l'invention, les moyens de partitionnement comprennent des parois de partitionnement s'étendant longitudinalement depuis l'une jusqu'à l'autre desdites parois annulaires transversales de manière à partager la cavité en plusieurs compartiments répartis autour de l'axe longitudinal. De plus, les parois de partitionnement sont décalées circonférentiellement par rapport aux moyens de raccordement fluidique.

Les parois de partitionnement s'étendent de préférence radialement par rapport à l'axe longitudinal et sont de préférence régulièrement réparties autour de l'axe longitudinal.

Une telle configuration permet également d'optimiser l'équilibrage en rotation de l'arbre.

De plus, les parois de partitionnement présentent avantageusement au moins une surface concave, et de préférence deux surfaces opposées concaves, de manière à optimiser la capacité des parois de partitionnement à retenir du lubrifiant.

De préférence, le nombre des parois de partitionnement est égal au nombre des orifices de passage de lubrifiant, et les parois de partitionnement sont diamétralement opposées par rapport aux orifices de passage de lubrifiant lorsque le palier hydrodynamique est vu en coupe transversale.

Dans un troisième mode de réalisation préféré de l'invention, les moyens de partitionnement partagent la cavité en une pluralité de compartiments décalés circonférentiellement par rapport aux moyens de raccordement fluidique et régulièrement répartis autour de l'axe longitudinal, et en un canal de distribution raccordant chaque compartiment aux moyens de raccordement fluidique et comprenant une portion circonférentielle décalée axialement d'un même côté par rapport à chaque compartiment et aux moyens de raccordement fluidique, ainsi que des premières portions de raccordement qui raccordent respectivement les compartiments de la cavité à la portion circonférentielle du canal de distribution et qui sont décalées angulairement par rapport à des extrémités circonférentielles de chaque compartiment.

De préférence, les moyens de raccordement fluidique sont situés axialement d'un même côté la portion circonférentielle du canal de distribution que les compartiments de la cavité.

Cette particularité permet que du lubrifiant puisse être stocké dans la portion circonférentielle du canal de distribution lorsque l'arbre est fortement incliné par rapport à la direction horizontale, de sorte que la portion circonférentielle du canal de distribution se trouve dans une position basse.

L'invention concerne également un ensemble, comprenant un support, un arbre, et un palier hydrodynamique destiné au guidage de l'arbre en rotation autour d'un axe longitudinal défini par rapport au support, dans lequel le palier hydrodynamique comprend une paroi annulaire externe de palier solidaire du support, ainsi qu'une paroi annulaire interne de palier solidaire de l'arbre et s'étendant en regard de la paroi annulaire externe de palier de manière à ménager un espace annulaire entre les parois annulaires interne et externe de palier. De plus, la paroi annulaire externe de palier comporte au moins un orifice d'alimentation en lubrifiant destiné à alimenter ledit espace annulaire en lubrifiant sous pression pour former un film fluide de portance.

Selon l'invention, l'ensemble comprend une cavité délimitée extérieurement par la paroi annulaire interne de palier et délimitée axialement par deux parois annulaires transversales solidaires de l'arbre et agencées de part et d'autre de la cavité, et la paroi annulaire interne de palier comporte des moyens de raccordement fluidique qui mettent la cavité en communication fluidique avec ledit espace annulaire. De plus, la cavité est ménagée de façon à constituer une réserve de lubrifiant pour une phase de fonctionnement en régime transitoire.

L'invention concerne également une turbomachine, notamment pour aéronef, comprenant un support, un arbre, et au moins un palier hydrodynamique du type décrit ci-dessus dont la paroi annulaire externe de palier est solidaire du support et la paroi annulaire interne de palier est solidaire de l'arbre, de sorte que le palier hydrodynamique participe au guidage de l'arbre en rotation.

De préférence, l'arbre fait partie d'un boîtier de commande d'accessoires de la turbomachine.

L'invention concerne enfin un procédé de lubrification d'un palier hydrodynamique du type décrit ci-dessus, comprenant :
- au moins une phase de fonctionnement en régime transitoire, dans laquelle du lubrifiant préalablement stocké dans la cavité est éjecté dans ledit espace annulaire en passant au travers des moyens de raccordement fluidique par effet centrifuge, et
- une phase de fonctionnement en régime établi, dans laquelle ledit espace annulaire est alimenté en lubrifiant sous pression au travers de chaque orifice d'alimentation en lubrifiant, et une partie du lubrifiant pénètre dans la cavité au travers des moyens de raccordement fluidique.

En phase de fonctionnement en régime établi, le lubrifiant provenant de chaque orifice d'alimentation en lubrifiant permet de former un film fluide de portance au sein dudit espace annulaire.

En phase de fonctionnement en régime transitoire, le lubrifiant provenant de la cavité permet au moins de former une fine couche de lubrifiant permettant au palier hydrodynamique de fonctionner en régime dit « onctueux ».

La phase de fonctionnement en régime transitoire est par exemple une phase de démarrage, dans laquelle l'arbre est mis en rotation.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique partielle en coupe transversale d'un palier hydrodynamique selon un premier mode de réalisation préféré de l'invention ;
- la figure 2 est une vue schématique partielle en coupe axiale du palier hydrodynamique visible sur la figure 1 ;
- la figure 3 est une vue schématique partielle de face d'un arbre et d'une bague appartenant au palier hydrodynamique visible sur la figure 1 ;
- la figure 4 est une vue schématique partielle en coupe axiale de l'arbre et de la bague de la figure 3, selon le plan A-A de la figure 3 ;
- la figure 5 est une vue schématique partielle de côté de l'arbre et de la bague de la figure 3 ;
- la figure 6 est une vue schématique partielle en coupe transversale de l'arbre et de la bague de la figure 3, selon le plan B-B de la figure 5 ;
- la figure 7 est une vue schématique en perspective de la bague de la figure 3 ;
- les figures 8 et 9 sont des vues semblables à la figure 6, montrant du lubrifiant stocké dans la bague, respectivement dans deux positions angulaires distinctes de cette bague ;
- la figure 10 est une vue schématique en perspective d'une bague appartenant à un palier hydrodynamique selon un deuxième mode de réalisation préféré de l'invention ;
- les figures 11 et 12 sont des vues schématiques en coupe transversale de la bague de la figure 10, montrant du lubrifiant stocké dans la bague, respectivement dans deux positions angulaires distinctes de cette bague ;
- la figure 13 est une vue schématique en coupe axiale d'une bague appartenant à un palier hydrodynamique selon un troisième mode de réalisation préféré de l'invention, selon le plan E-E de la figure 14 ;
- la figure 14 est une vue schématique en coupe axiale de la bague de la figure 13, selon le plan C-C de la figure 13 ;
- la figure 15 est une vue schématique en coupe transversale de la bague de la figure 13, selon le plan D-D de la figure 13 ;
- la figure 16 est une vue schématique en perspective de la bague de la figure 13 ;
- la figure 17 est une vue schématique partielle en perspective d'une turbomachine comprenant un palier hydrodynamique selon l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

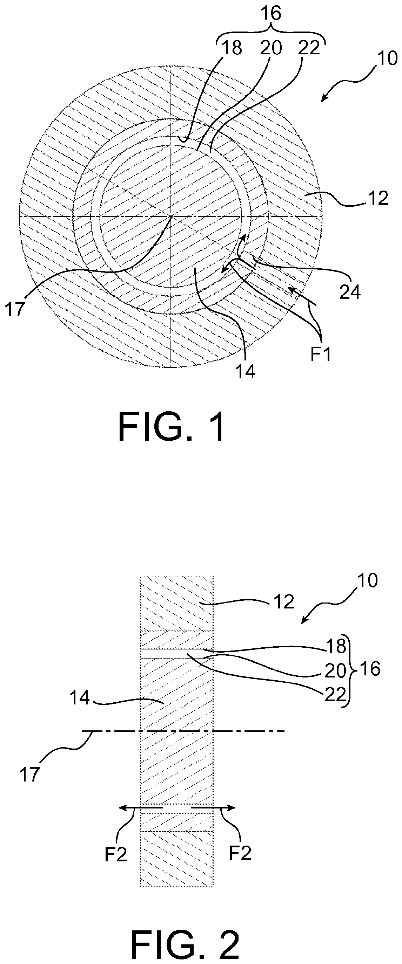

Les figures 1 à 9 illustrent un ensemble 10, comprenant un support 12, un arbre 14, et un palier hydrodynamique 16 selon un premier mode de réalisation préféré de l'invention pour le guidage de l'arbre en rotation selon un axe longitudinal 17. Dans la présente description, l'axe longitudinal 17 est en effet défini comme étant l'axe de rotation de l'arbre 14.

Le palier hydrodynamique 16 comprend une paroi annulaire externe de palier 18 solidaire du support 12, ainsi qu'une paroi annulaire interne de palier 20 solidaire de l'arbre 14 et s'étendant en regard de la paroi annulaire externe de palier 18 (figures 1 et 2). Les parois annulaires 18 et 20 ménagent ainsi entre elles un espace annulaire 22. Ces parois annulaires 18 et 20 sont de préférence de forme cylindrique de révolution.

La paroi annulaire externe de palier 18 comporte un orifice d'alimentation en lubrifiant 24 destiné à être raccordé à un circuit de lubrification (non visible sur les figures) pour alimenter l'espace annulaire 22 en lubrifiant sous pression, de manière à former un film fluide de portance au sein de l'espace annulaire 22, d'une manière connue en soi.

Dans l'exemple illustré, la paroi annulaire externe de palier 18 est constituée d'une bague antifriction montée fixement dans le support 12.

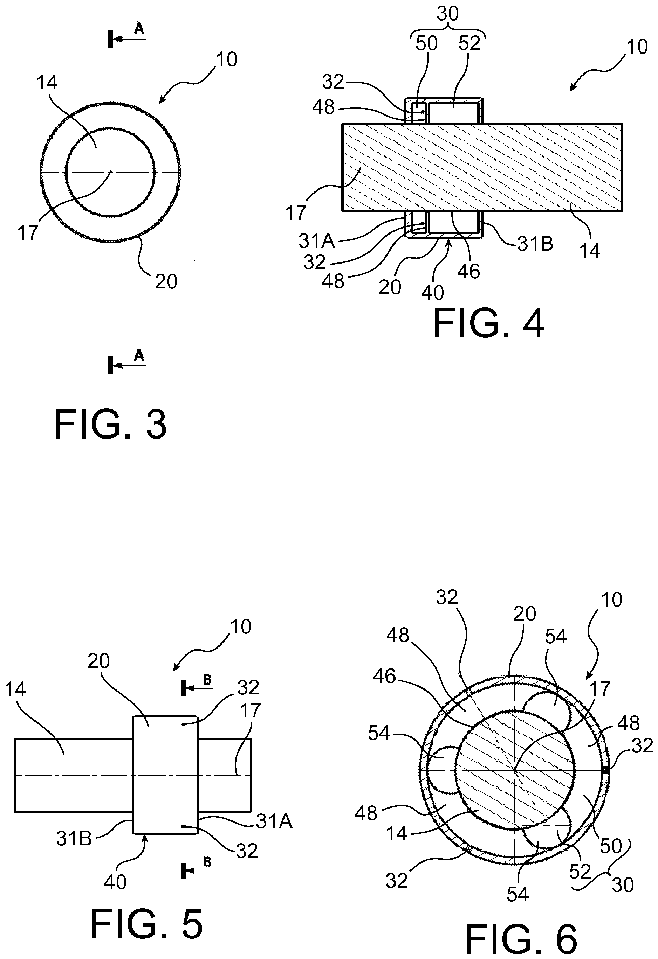

Selon une particularité de l'invention, le palier hydrodynamique 16 comprend une cavité 30 (figures 4, 6 et 7) délimitée extérieurement par la paroi annulaire interne de palier 20 et délimitée axialement par deux parois annulaires transversales 31A, 31B solidaires de l'arbre 14 et agencées de part et d'autre de la cavité 30.

De plus, la paroi annulaire interne de palier 20 comporte des moyens de raccordement fluidique 32 qui mettent la cavité 30 en communication fluidique avec l'espace annulaire 22. La cavité 30 est destinée à constituer une réserve de lubrifiant, comme cela apparaîtra plus clairement dans ce qui suit.

Il est à noter que la terminologie « parois transversales » s'entend au sens large, comme désignant des parois s'étendant en direction de l'arbre à partir de la paroi annulaire interne de palier 20. Les parois annulaires transversales 31A, 31B peuvent ainsi s'étendre radialement, c'est-à-dire orthogonalement à l'axe longitudinal 17, ou être inclinées par rapport à cet axe 17.

Dans les modes de réalisation illustrés, les moyens de raccordement fluidique comprennent une pluralité d'orifices de passage de lubrifiant 32, par exemple au nombre de trois, qui traversent la paroi annulaire interne de palier. Ces orifices de passage de lubrifiant 32 sont de préférence régulièrement répartis autour de l'axe longitudinal 17, ce qui permet d'optimiser l'équilibrage en rotation de l'arbre 14. Les orifices de passage de lubrifiant 32 sont de préférence centrés selon un même plan transversal, référencé B-B sur la figure 5, ce qui permet également d'optimiser l'équilibrage en rotation de l'arbre 14.

En variante, les moyens de raccordement fluidique peuvent consister en un unique orifice de passage de lubrifiant 32 sans sortir du cadre de l'invention.

De plus, dans les modes de réalisation représentés sur les figures, le palier hydrodynamique 16 comporte une bague 40 montée de manière amovible sur l'arbre 14 et intégrant la paroi annulaire interne de palier 20 ainsi que les deux parois annulaires transversales 31A, 31B (figure 4).

En variante, la paroi annulaire interne de palier 20 et les parois annulaires transversales 31A, 31B peuvent être intégrées à l'arbre 14 sans sortir du cadre de la présente invention.

L'une 31B des parois annulaires transversales comporte un ou plusieurs orifices de passage d'air 44, par exemple au nombre de trois, pour faciliter les variations du volume d'air contenu dans la cavité 30 de manière à compenser les variations du volume de lubrifiant contenu dans celle-ci. Les orifices de passage d'air 44 sont de préférence régulièrement répartis autour de l'axe longitudinal 17.

Par ailleurs, dans les deux modes de réalisation illustrés sur les figures 1 à 12, la cavité 30 est délimitée intérieurement par une surface pleine 46 de l'arbre 14 (figures 4 et 6).

De plus, le palier hydrodynamique 16 comporte des moyens de partitionnement raccordés à la paroi annulaire interne de palier 20 de manière à partager la cavité en plusieurs compartiments. Ces moyens de partitionnement sont destinés à former obstacle à un écoulement de lubrifiant contenu dans au moins l'un des compartiments, en direction des moyens de raccordement fluidique 32, sous l'effet de la gravité, et cela quelle que soit la position angulaire de l'arbre lorsque l'arbre 14 est à l'arrêt, comme cela apparaîtra plus clairement dans ce qui suit.

Dans le premier mode de réalisation préféré de l'invention, les moyens de partitionnement comprennent une paroi de partitionnement 48 de forme globalement annulaire partageant la cavité 30 en deux compartiments 50 et 52 agencés l'un derrière l'autre le long de l'axe longitudinal 17 (figures 4, 6 et 7). Pour les besoins de la présente description, ces compartiments seront dénommés « compartiment avant 50 » et « compartiment arrière 52 » dans ce qui suit.

Dans l'exemple illustré, les orifices de passage de lubrifiant 32 sont donc agencés d'un même côté par rapport à la paroi de partitionnement 48 et communiquent ainsi tous avec le compartiment avant 50 de la cavité 30.

Il est à noter en outre que les orifices de passage de lubrifiant 32 sont écartés de la paroi transversale 31A qui délimite le compartiment avant 50.

De plus, la paroi de partitionnement 48 s'étend par exemple transversalement par rapport à l'axe longitudinal 17. En variante, d'autres géométries annulaires sont possibles pour la paroi de partitionnement 48.

La paroi de partitionnement 48 comporte au moins une ouverture 54 délimitée par la paroi annulaire interne de palier 20 et décalée circonférentiellement par rapport à chaque orifice de passage de lubrifiant 32.

Dans l'exemple illustré, la paroi de partitionnement 48 comporte trois ouvertures 54. Celles-ci sont régulièrement réparties autour de l'axe longitudinal 17, ce qui permet d'optimiser l'équilibrage en rotation de l'arbre 14. De plus, chaque ouverture 54 est de préférence agencée à égale distance de deux orifices de passage de lubrifiant 32 consécutifs (figure 6). Chaque ouverture 54 est par exemple en forme de portion de disque tangent à la paroi annulaire interne de palier 20.

Dans l'exemple illustré, chaque ouverture 54 s'étend jusqu'à l'extrémité radialement interne de la paroi de partitionnement 48. En variante, chaque ouverture 54 peut prendre la forme d'une encoche formée dans l'extrémité radialement externe de la paroi de partitionnement 48 au contact de la paroi annulaire interne de palier 20, de sorte qu'une portion radialement interne de la paroi de partitionnement 48 s'étende continûment tout autour de l'axe longitudinal 17.

D'une manière générale, le nombre d'ouvertures 54 peut être distinct du nombre d'orifices de passage de lubrifiant 32 sans sortir du cadre de l'invention.

Le palier hydrodynamique 16 décrit ci-dessus fonctionne de la manière suivante.

En régime établi, l'arbre 14 est entraîné en rotation, et le circuit de lubrification fournit du lubrifiant sous pression dans l'espace annulaire 22 par l'intermédiaire de l'orifice d'alimentation en lubrifiant 24, comme l'illustrent les flèches F1 de la figure 1. Sous l'effet de la pression, le lubrifiant s'échappe par les extrémités axiales de l'espace annulaire 22, d'une manière conventionnelle, comme l'illustrent les flèches F2 de la figure 2.

Une partie du lubrifiant pénètre néanmoins dans la cavité 30 au travers des orifices de passage de lubrifiant 32.

A cette fin, le circuit de lubrification est configuré de sorte que la pression du lubrifiant soit suffisante pour compenser l'effet centrifuge subi par le lubrifiant du fait de son entraînement en rotation par viscosité au contact des parois annulaires externe 18 et interne 20 de palier.

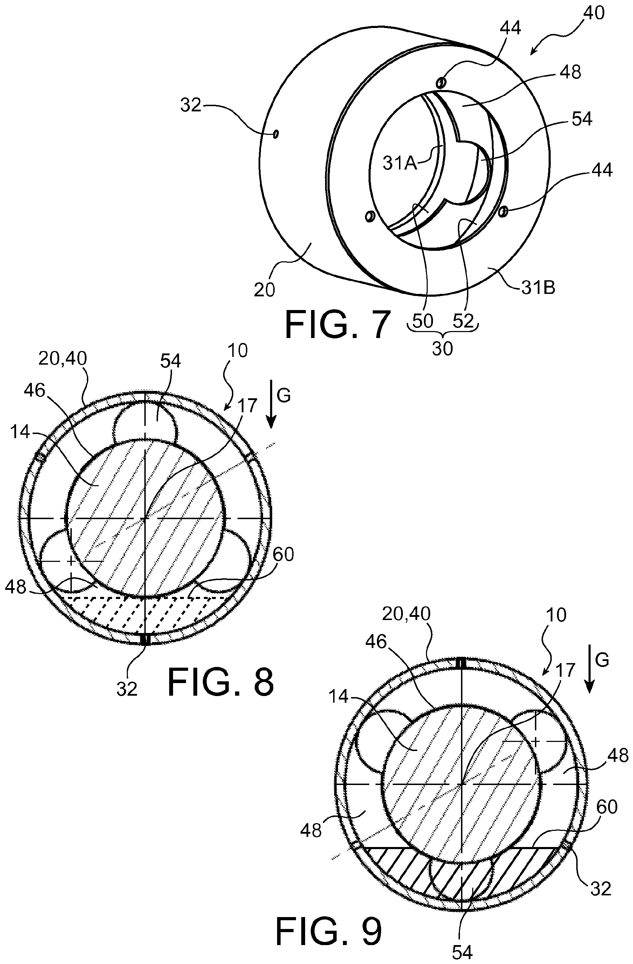

Lorsque l'arbre 14 s'arrête de tourner, une partie du lubrifiant reste dans la cavité 30, quelle que soit la position angulaire de l'arbre 14 et donc de la bague 40, comme le montrent les figures 8 et 9.

En effet, si l'arbre 14 est dans une position angulaire telle qu'un orifice de passage de lubrifiant 32 se trouve dans une position basse, comme sur la figure 8, le lubrifiant éventuellement présent dans le compartiment avant 50 de la cavité 30 va s'écouler au travers de l'orifice de passage de lubrifiant 32 jusque dans l'espace annulaire 22 sous l'effet de la gravité G, et va éventuellement s'échapper par les extrémités axiales de l'espace annulaire 22. Par contre, du lubrifiant 60 éventuellement présent dans le compartiment arrière 52 de la cavité 30 est retenu par la paroi de partitionnement 48. Par « position basse », il faut bien entendu comprendre une position dite « à 6 heures » par référence au cadran d'une montre, la ligne 6h-12h étant à la verticale.

De plus, si l'arbre 14 est dans une position angulaire telle qu'une ouverture 54 se trouve en position basse, comme sur la figure 9, du lubrifiant 60 présent dans les deux compartiments 50 et 52 de la cavité 30 peut être stocké dans cette cavité.

Dans une situation intermédiaire entre les deux situations précédentes, la façon dont le lubrifiant peut être stocké dans la cavité 30 est déterminée par l'élément le plus proche de la position basse, parmi un orifice de passage de lubrifiant 32 et une ouverture 54. Ainsi, si l'élément le plus proche de la position basse est un orifice de passage de lubrifiant 32, du lubrifiant peut être stocké dans le compartiment arrière 52 jusqu'à une hauteur correspondant à la hauteur de l'ouverture 54 la plus proche de la position basse, et du lubrifiant peut être stocké dans le compartiment avant 50 jusqu'à une hauteur correspondant à la hauteur de l'orifice de passage de lubrifiant 32 le plus proche de la position basse. Par contre, si l'élément le plus proche de la position basse est une ouverture 54, du lubrifiant peut être stocké dans les deux compartiments 50 et 52 jusqu'à une hauteur correspondant à la hauteur de l'orifice de passage de lubrifiant 32 le plus proche de la position basse.

La quantité de lubrifiant pouvant être retenu dans la cavité 30 dépend ainsi de la position angulaire de l'arbre 14. Quelle que soit cette position angulaire, la configuration du palier hydrodynamique 16 permet néanmoins d'assurer qu'au moins une quantité minimale de lubrifiant puisse être conservée dans la cavité 30.

Du fait que les orifices de passage de lubrifiant 32 sont écartés de la paroi transversale 31A, le stockage de lubrifiant dans la cavité 30 est en outre possible lorsque l'arbre 14 est incliné par rapport à la direction horizontale, tout au moins lorsque l'arbre 14 est orienté dans une direction telle que les orifices de passage d'air 44 se trouvent disposés au-dessus de la cavité 30.

Lors d'une mise en rotation ultérieure de l'arbre 14, il se peut que le circuit de lubrification tarde à assurer l'alimentation de l'espace annulaire 22 par l'intermédiaire de l'orifice d'alimentation en lubrifiant 24. Dans ce cas, le lubrifiant stocké dans la cavité 30 est éjecté progressivement par chaque orifice de passage de lubrifiant 32 jusque dans l'espace annulaire 22 sous l'effet de la force centrifuge. Ce lubrifiant provenant de la cavité 30 permet de former une fine couche de lubrifiant entre la paroi annulaire externe de palier 18 et la paroi annulaire interne de palier 20, permettant au moins au palier hydrodynamique 16 de fonctionner dans un régime dit « onctueux ». Le lubrifiant provenant de la cavité 30 permet ainsi d'éviter le grippage du palier hydrodynamique, jusqu'à ce que tout le lubrifiant préalablement stocké dans la cavité 30 ait été consommé.

Il apparaît donc clairement que :
- chaque ouverture 54 permet la circulation de lubrifiant entre les deux compartiments 50 et 52 de la cavité 30 lorsque l'arbre 14 est entraîné en rotation, et permet ainsi à tout le lubrifiant présent dans la cavité 30 d'atteindre les orifices de passage de lubrifiant 32, et que
- la paroi de partitionnement 48 forme obstacle à un écoulement de lubrifiant contenu dans la cavité 30, en l'occurrence dans le compartiment arrière 52 de celle-ci, sous l'effet de la gravité en direction de l'un quelconque des orifices de passage de lubrifiant 32 lorsque l'arbre 14 est à l'arrêt.

Il est à noter qu'en variante, les orifices de passage de lubrifiant 32 peuvent comprendre des orifices débouchant dans le compartiment avant 50 et d'autres orifices débouchant dans le compartiment arrière 52 et décalés circonférentiellement par rapport aux orifices débouchant dans le compartiment avant 50, sans sortir du cadre de l'invention. Dans ce cas, lorsque l'arbre 14 est à l'arrêt et que l'un des orifices de passage de lubrifiant 32 se trouve en position basse, du lubrifiant peut être stocké au moins dans le compartiment qui n'est pas le compartiment dans lequel débouche cet orifice.

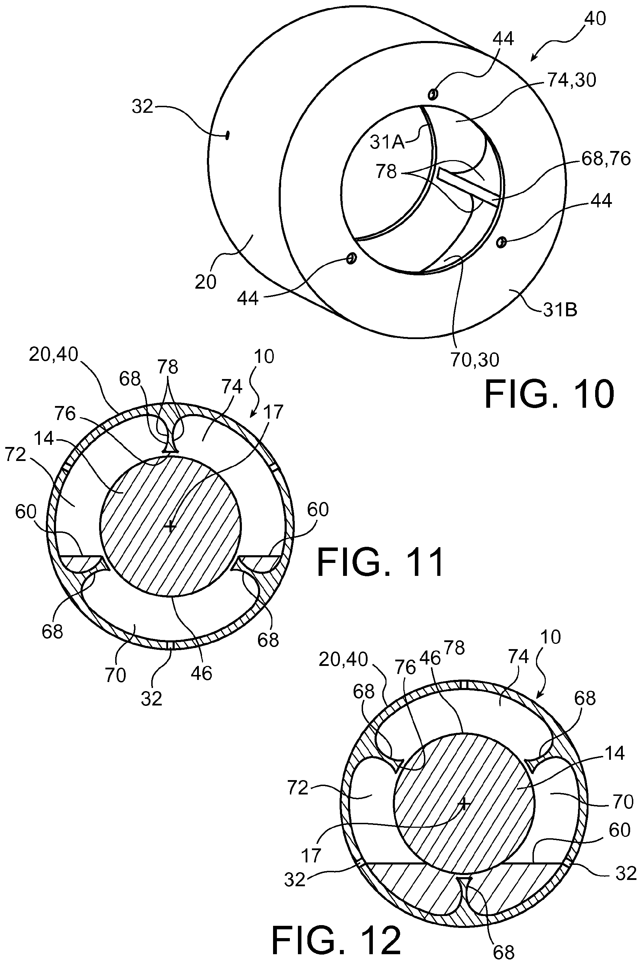

Dans le deuxième mode de réalisation préféré de l'invention illustré sur les figures 10 à 12, les moyens de partitionnement comprennent des parois de partitionnement 68 s'étendant longitudinalement depuis l'une 31A jusqu'à l'autre 31B des parois annulaires transversales, de manière à partager la cavité 30 en plusieurs compartiments 70, 72, 74 répartis autour de l'axe longitudinal, c'est-à-dire agencés circonférentiellement bout-à-bout. Les parois de partitionnement 68 sont décalées circonférentiellement par rapport à chaque orifice de passage de lubrifiant 32.

Dans l'exemple illustré, les parois de partitionnement 68 sont au nombre de trois, de même que les compartiments 70, 72, 74 que ces parois délimitent, ainsi que les orifices de passage de lubrifiant 32.

Les orifices de passage de lubrifiant 32 sont régulièrement répartis autour de l'axe longitudinal 17 de manière à déboucher respectivement dans les trois compartiments 70, 72, 74.

Les parois de partitionnement 68 sont de préférence agencées de sorte que chaque orifice de passage de lubrifiant 32 soit angulairement équidistant de deux parois de partitionnement 68 consécutives.

A titre d'exemple préférentiel, chacune des parois de partitionnement 68 s'étend radialement. Cela permet d'optimiser la capacité de ces parois à retenir du lubrifiant, et permet de surcroît de faciliter l'équilibrage en rotation de l'arbre 14. En variante, les parois de partitionnement 68 peuvent toutefois être inclinées par rapport à la direction radiale sans sortir du cadre de l'invention.

De plus, chacune des parois de partitionnement 68 présente une extrémité radialement interne 76 espacée de l'arbre 14. Cela permet de faciliter le montage de la bague 40 sur l'arbre 14 ainsi que le démontage de la bague 40. En variante, l'extrémité radialement interne 76 de chacune des parois de partitionnement 68 peut venir en contact avec l'arbre 14 sans sortir du cadre de l'invention.

En outre, chacune des parois de partitionnement 68 présente préférentiellement deux surfaces opposées 78 à section transversale concave, ce qui permet également d'optimiser la capacité de chaque paroi de partitionnement à retenir du lubrifiant, comme cela apparaîtra plus clairement dans ce qui suit.

Le fonctionnement du palier hydrodynamique 16 selon le deuxième mode de réalisation est globalement analogue à celui du palier hydrodynamique 16 selon le premier mode de réalisation décrit ci-dessus.

En particulier, les figures 11 et 12 illustrent comment une partie du lubrifiant reste dans la cavité 30, quelle que soit la position angulaire de l'arbre 14, et donc de la bague 40, lorsque l'arbre 14 s'arrête de tourner.

Ainsi, si l'arbre 14 est dans une position angulaire telle qu'un orifice de passage de lubrifiant 32 se trouve en position basse, comme sur la figure 11, le lubrifiant éventuellement présent dans le compartiment 70 dans lequel débouche cet orifice va s'écouler au travers de cet orifice jusque dans l'espace annulaire 22, sous l'effet de la gravité G, et va éventuellement s'échapper par les extrémités axiales de l'espace annulaire 22. Par contre, du lubrifiant 60 présent dans les deux autres compartiments 72 et 74 de la cavité 30 est retenu par les deux parois de partitionnement 68 qui séparent respectivement ces deux compartiments 72 et 74 du compartiment 70. La rétention de lubrifiant, lorsque l'arbre 14 est dans cette position angulaire, est renforcée par le fait que les surfaces 78 des parois de partitionnement 68 sont à section transversale concave, comme cela apparaît sur la figure 11.

De plus, si l'arbre 14 est dans une position angulaire telle que les orifices de passage de lubrifiant 32 sont tous éloignés de la position basse, comme sur la figure 12, du lubrifiant 60 présent dans les deux compartiments 70 et 72 de la cavité 30 qui sont les plus bas peut être stocké dans ces deux compartiments 70 et 72.

La quantité de lubrifiant pouvant être retenue dans la cavité 30 dépend là encore de la position angulaire de l'arbre 14. Quelle que soit cette position angulaire, la configuration du palier hydrodynamique 16 permet d'assurer qu'au moins une quantité minimale de lubrifiant soit conservée dans la cavité 30.

Il apparaît encore clairement que chaque paroi de partitionnement 68 peut former obstacle à un écoulement de lubrifiant contenu dans la cavité 30 sous l'effet de la gravité, en direction de l'un des orifices de passage de lubrifiant 32, lorsque l'arbre 14 est à l'arrêt.

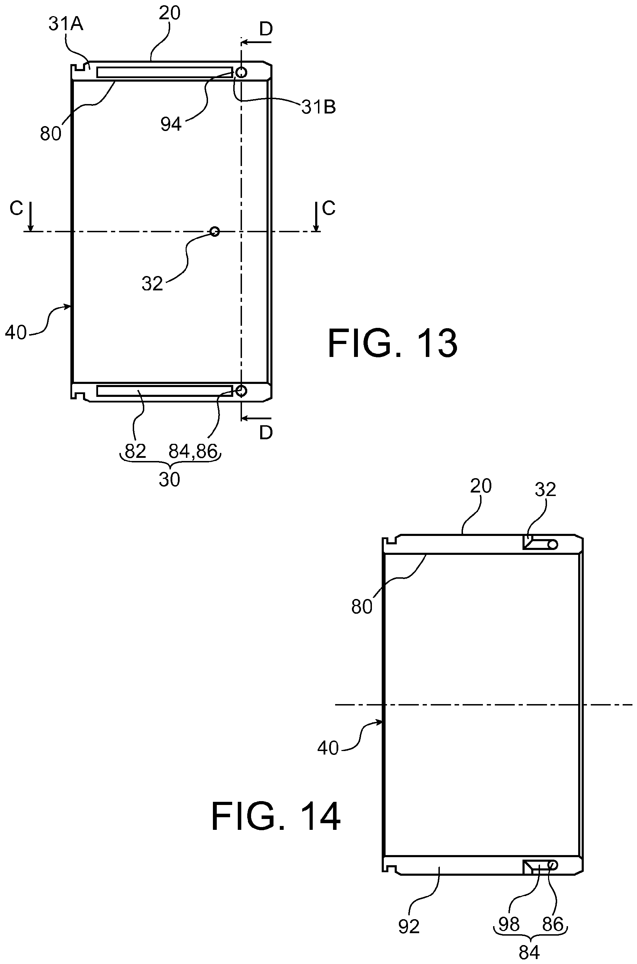

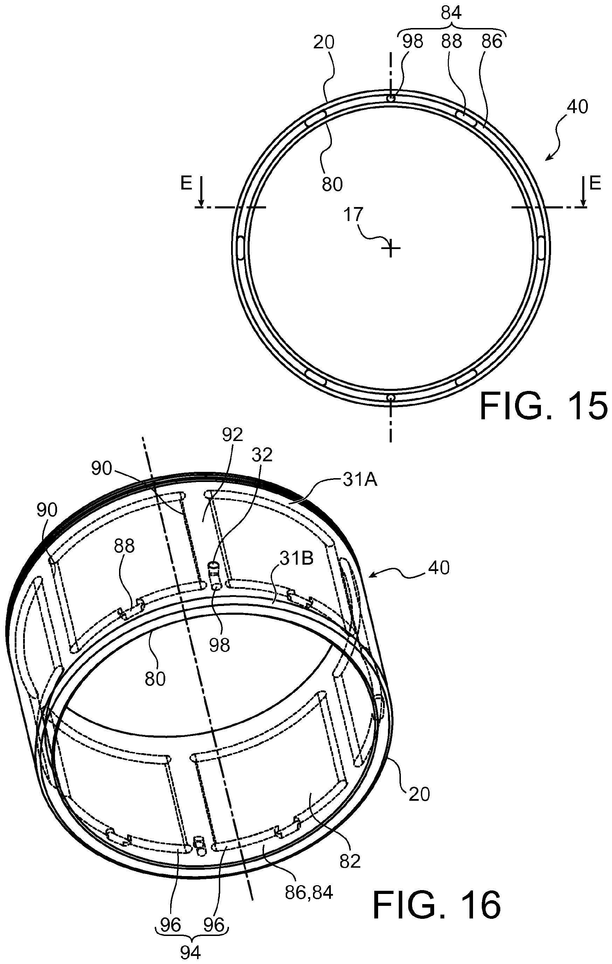

Les figures 13 à 16 illustrent une bague 40 appartenant à un palier hydrodynamique selon un troisième mode de réalisation préféré de l'invention. Ce palier hydrodynamique est globalement semblable aux paliers hydrodynamiques décrits ci-dessus mais s'en distingue par la configuration de la bague 40.

Cette bague 40 comprend une paroi annulaire interne de bague 80 espacée de la paroi annulaire interne de palier 20 et délimitant intérieurement la cavité annulaire 30.

De plus, les moyens de partitionnement partagent la cavité 30 en une pluralité de compartiments 82 décalés circonférentiellement par rapport aux moyens de raccordement fluidique 32 et de préférence régulièrement répartis autour de l'axe longitudinal 17, et en un canal de distribution 84 raccordant chaque compartiment 82 aux moyens de raccordement fluidique 32.

Le canal de distribution 84 comprend une portion circonférentielle 86 décalée axialement d'un même côté par rapport à chaque compartiment 82 et aux moyens de raccordement fluidique 32, ainsi que des premières portions de raccordement 88 qui raccordent respectivement les compartiments 82 à la portion circonférentielle 86 et qui sont décalées angulairement par rapport à des extrémités circonférentielles 90 de chaque compartiment 82.

Dans l'exemple illustré, les premières portions de raccordement 88 s'étendent selon la direction longitudinale.

De plus, les moyens de raccordement fluidique comprennent deux orifices de passage de lubrifiant 32 diamétralement opposés.

En outre, les compartiments 82 sont par exemple au nombre de six.

Les moyens de partitionnement comprennent ainsi des parois de partitionnement longitudinales 92 qui s'étendent entre les compartiments 82 et définissent les extrémités circonférentielles 90 des compartiments 82, et une paroi de partitionnement annulaire 94 s'étendant entre la portion circonférentielle 86 du canal de distribution 84 et les compartiments 82, et divisée en plusieurs secteurs annulaires 96 séparés les uns des autres par les premières portions de raccordement 88 et par des secondes portions de raccordement 98 appartenant au canal de distribution 84. Ces secondes portions de raccordement 98 raccordent respectivement les orifices de passage de lubrifiant 32 à la portion circonférentielle 86 du canal de distribution 84.

Chacun des orifices de passage de lubrifiant 32 est situé entre deux compartiments 82 circonférentiellement consécutifs, et s'étend donc au sein d'une paroi de partitionnement longitudinale 92 correspondante.

Les orifices de passage de lubrifiant 32 sont ainsi situés axialement d'un même côté de la portion circonférentielle 86 du canal de distribution 84 que les compartiments 82. Cette particularité permet que du lubrifiant puisse être stocké au moins dans la portion circonférentielle 86 du canal de distribution 84 lorsque l'arbre 14 est fortement incliné par rapport à la direction horizontale, de sorte que la portion circonférentielle 86 du canal de distribution 84 se trouve au moins partiellement en position basse.

Il est à noter que la bague 40 telle que proposée dans le troisième mode de réalisation préféré de l'invention peut être réalisée au moyen de techniques de fabrication additive, telles que la fusion laser, ou encore la fusion par faisceaux d'électrons.

Le fonctionnement du palier hydrodynamique selon le troisième mode de réalisation est globalement analogue à celui du palier hydrodynamique selon le deuxième mode de réalisation décrit ci-dessus.

Il apparaît clairement que quelle que soit la position angulaire de l'arbre 14 à l'arrêt, du lubrifiant peut être conservé dans au moins l'un des compartiments 82, et même dans chacun de ces compartiments 82 en ce qui concerne l'exemple particulier illustré sur les figures 13 à 16, tout au moins tant que l'inclinaison de l'arbre 14 par rapport à la direction horizontale demeure nulle ou modérée. En cas de forte inclinaison de l'arbre 14, en particulier si l'arbre 14 venait à adopter une orientation sensiblement verticale telle que le canal de distribution 84 se trouve en position basse, du lubrifiant peut être conservé dans le canal de distribution 84, et éventuellement dans les compartiments 82, jusqu'à une hauteur correspondant à la position axiale des orifices de passage de lubrifiant 32.

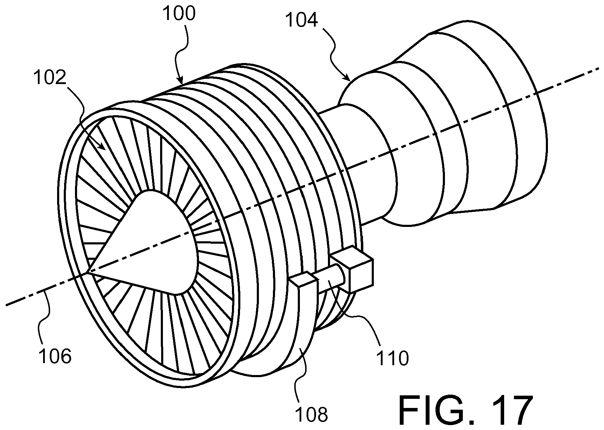

La figure 17 illustre une turbomachine 100 pour aéronef, telle qu'un turboréacteur à double flux, comprenant de manière générale une soufflante 102 destinée à l'aspiration d'un flux d'air se divisant en aval de la soufflante en un flux primaire alimentant un cœur 104 de la turbomachine et un flux secondaire contournant ce cœur. Le cœur de la turbomachine comporte, de manière générale, un compresseur basse pression, un compresseur haute pression, une chambre de combustion, une turbine haute pression et une turbine basse pression. Les rotors de la turbomachine 100 sont montés à rotation autour d'un axe longitudinal 106 de la turbomachine.

La turbomachine 100 comporte en particulier un boîtier de commande d'accessoires *(AGB)* 108 comprenant un arbre interne (non visible sur la figure) relié à un arbre de rotor de la turbomachine au moyen d'une prise de puissance 110.

L'arbre interne est par exemple monté sur un carter du boîtier de commande d'accessoires 108 au moyen de deux paliers à roulement agencés respectivement au niveau des extrémités axiales de l'arbre et au moyen d'un palier hydrodynamique du type décrit ci-dessus agencé entre lesdites extrémités axiales de l'arbre.

Le carter, l'arbre et le palier hydrodynamique forment ainsi un ensemble 10 du type décrit ci-dessus.

## Revendications

1. Palier hydrodynamique (16) destiné au guidage d'un arbre (14) en rotation autour d'un axe longitudinal (17) défini par rapport à un support (12),
dans lequel le palier hydrodynamique comprend une paroi annulaire externe de palier (18) fixe, ainsi qu'une paroi annulaire interne de palier (20) rotative s'étendant en regard de la paroi annulaire externe de palier (18) de manière à ménager un espace annulaire (22) entre les parois annulaires interne et externe de palier (18, 20),
dans lequel la paroi annulaire externe de palier (18) comporte au moins un orifice d'alimentation en lubrifiant (24) destiné à alimenter ledit espace annulaire (22) en lubrifiant sous pression pour former un film fluide de portance,
le palier hydrodynamique comprenant une cavité (30) délimitée extérieurement par la paroi annulaire interne de palier (20) et délimitée axialement par deux parois annulaires transversales (31A, 31B) solidaires de la paroi annulaire interne de palier (20) et agencées de part et d'autre de la cavité (30),
la paroi annulaire interne de palier (20) comportant des moyens de raccordement fluidique (32) qui mettent la cavité (30) en communication fluidique avec ledit espace annulaire (22),
**caractérisé en ce qu'**il comprend des moyens de partitionnement (48, 68, 92, 94) raccordés à la paroi annulaire interne de palier (20) de manière à partager la cavité (30) en plusieurs compartiments (50, 52, 70, 72, 74, 82), les moyens de partitionnement formant obstacle à un écoulement de lubrifiant contenu dans au moins l'un des compartiments sous l'effet de la gravité (G), en direction des moyens de raccordement fluidique (32), quelle que soit la position angulaire de la paroi annulaire interne de palier (20) lorsque cette dernière est à l'arrêt, de sorte que la cavité (30) constitue une réserve de lubrifiant pour une phase de fonctionnement en régime transitoire.

2. Palier hydrodynamique selon la revendication 1, dans lequel les moyens de raccordement fluidique comprennent une pluralité d'orifices de passage de lubrifiant (32) qui traversent la paroi annulaire interne de palier (20) et qui sont régulièrement répartis autour de l'axe longitudinal (17).

3. Palier hydrodynamique selon la revendication 1 ou 2, comprenant une bague (40) destinée à être montée de manière amovible sur l'arbre (14) et intégrant ladite paroi annulaire interne de palier (20) ainsi que lesdites parois annulaires transversales (31A, 31B).

4. Palier hydrodynamique selon l'une quelconque des revendications 1 à 3, dans lequel les moyens de partitionnement comprennent une paroi de partitionnement (48) de forme annulaire partageant la cavité (30) en deux compartiments (50, 52) agencés l'un derrière l'autre le long de l'axe longitudinal (17), ladite paroi de partitionnement comportant au moins une ouverture (54) délimitée par la paroi annulaire interne de palier (20) et décalée circonférentiellement par rapport aux moyens de raccordement fluidique (32).

5. Palier hydrodynamique selon l'une quelconque des revendications 1 à 3, dans lequel les moyens de partitionnement comprennent des parois de partitionnement (68) s'étendant longitudinalement depuis l'une jusqu'à l'autre desdites parois annulaires transversales (31A, 31B) de manière à partager la cavité (30) en plusieurs compartiments (70, 72, 74) répartis autour de l'axe longitudinal (17), les parois de partitionnement (68) étant décalées circonférentiellement par rapport aux moyens de raccordement fluidique (32).

6. Palier hydrodynamique selon l'une quelconque des revendications 1 à 3, dans lequel les moyens de partitionnement partagent la cavité (30) en une pluralité de compartiments (82) décalés circonférentiellement par rapport aux moyens de raccordement fluidique (32) et régulièrement répartis autour de l'axe longitudinal (17), et en un canal de distribution (84) raccordant chaque compartiment (82) aux moyens de raccordement fluidique (32) et comprenant une portion circonférentielle (86) décalée axialement d'un même côté par rapport à chaque compartiment (82) et aux moyens de raccordement fluidique (32), ainsi que des premières portions de raccordement (88) qui raccordent respectivement les compartiments (82) de la cavité à la portion circonférentielle (86) du canal de distribution et qui sont décalées angulairement par rapport à des extrémités circonférentielles (90) de chaque compartiment.

7. Palier hydrodynamique selon la revendication 6, dans lequel les moyens de raccordement fluidique (32) sont situés axialement d'un même côté de la portion circonférentielle (86) du canal de distribution (84) que les compartiments (82) de la cavité (30).

8. Turbomachine (100), notamment pour aéronef, comprenant un support (12), un arbre (14), et au moins un palier hydrodynamique (16) selon l'une quelconque des revendications 1 à 7 dont la paroi annulaire externe de palier (18) est solidaire du support (12) et la paroi annulaire interne de palier (20) est solidaire de l'arbre (14), de sorte que le palier hydrodynamique (16) participe au guidage de l'arbre (14) en rotation.

9. Turbomachine selon la revendication 8, dans laquelle l'arbre (14) fait partie d'un boîtier de commande d'accessoires (108) de la turbomachine.

10. Procédé de lubrification d'un palier hydrodynamique (16) selon l'une quelconque des revendications 1 à 7, comprenant :
- au moins une phase de fonctionnement en régime transitoire, dans laquelle du lubrifiant (60) préalablement stocké dans la cavité (30) est éjecté dans ledit espace annulaire (22) en passant au travers des moyens de raccordement fluidique (32) par effet centrifuge, et
- une phase de fonctionnement en régime établi, dans laquelle ledit espace annulaire (22) est alimenté en lubrifiant sous pression au travers de chaque orifice d'alimentation en lubrifiant (24), et une partie du lubrifiant pénètre dans la cavité (30) au travers des moyens de raccordement fluidique (32).

## Patentansprüche

1. Hydrodynamisches Lager (16) für die Führung einer Welle (14), die um eine Längsachse (17) rotiert, welche im Verhältnis zu einer Stütze (12) definiert ist, wobei das hydrodynamische Lager eine unbewegliche ringförmige Lageraußenwand (18) und eine drehbare ringförmige Lagerinnenwand (20) umfasst, welche gegenüber der ringförmigen Lageraußenwand (18) so ausgeformt ist, dass ein ringförmiger Spalt (22) zwischen der ringförmigen Lagerinnen- und -außenwand (18, 20) entsteht, wobei die ringförmige Lageraußenwand (18) mindestens eine Schmiermittelzuführungsöffnung (24) für die Zuführung von unter Druck stehendem Schmiermittel in den genannten ringförmigen Spalt (22) umfasst, damit dieses einen flüssigen Tragfilm bildet, wobei das hydrodynamische Lager eine Vertiefung (30) umfasst, die außen von der ringförmigen Lagerinnenwand (20) und axial von zwei ringförmigen Querwänden (31A, 31B) begrenzt wird, welche fest mit der ringförmigen Lagerinnenwand (20) verbunden und auf beiden Seiten der Vertiefung (30) angeordnet sind, wobei die ringförmige Lagerinnenwand (20) Flüssigkeitsverbindungsvorrichtungen (32) umfasst, über die ein Flüssigkeitsaustausch zwischen der Vertiefung (30) und dem genannten ringförmigen Spalt (22) ermöglicht wird, **dadurch gekennzeichnet, dass** es Trennvorrichtungen (48, 68, 92, 94) umfasst, die so mit der ringförmigen Lagerinnenwand (20) verbunden sind, dass sie die Vertiefung (30) in mehrere Räume (50, 52, 70, 72, 74, 82) unterteilen, wobei die Trennvorrichtungen unabhängig von der Winkelstellung der ringförmigen Lagerinnenwand (20) verhindern, dass, wenn Letztere stillsteht, Schmiermittel aus mindestens einem der Räume durch Gravitationswirkung (G) in Richtung der Flüssigkeitsverbindungsvorrichtungen (32) fließt, sodass die Vertiefung (30) eine Schmiermittelreserve für eine Betriebsphase im Übergangszustand bildet.

2. Hydrodynamisches Lager gemäß Anspruch 1, wobei die Flüssigkeitsverbindungsvorrichtungen mehrere Schmiermittel-Durchgangsöffnungen (32) durch die ringförmige Lagerinnenwand (20) umfassen, die gleichmäßig um die Längsachse (17) herum verteilt sind.

3. Hydrodynamisches Lager gemäß Anspruch 1 oder 2, das eine Hülse (40) umfasst, die dafür vorgesehen ist, abnehmbar an der Welle (14) montiert zu werden, und die die genannte ringförmige Lagerinnenwand (20) sowie die genannten ringförmigen Querwände (31A, 31B) beinhaltet.

4. Hydrodynamisches Lager gemäß einem der Ansprüche 1 bis 3, wobei die Trennvorrichtungen eine ringförmige Trennwand (48) umfassen, die die Vertiefung (30) in zwei Räume (50, 52) unterteilt, die hintereinander entlang der Längsachse (17) angeordnet sind, wobei die genannte Trennwand mindestens eine Öffnung (54) umfasst, die von der ringförmigen Lagerinnenwand (20) begrenzt und umlaufend versetzt zu den Flüssigkeitsverbindungsvorrichtungen (32) angeordnet ist.

5. Hydrodynamisches Lager gemäß einem der Ansprüche 1 bis 3, wobei die Trennvorrichtungen Trennwände (68) umfassen, die sich längs von einer zu der anderen der genannten ringförmigen Querwände (31A, 31B) erstrecken, sodass sie die Vertiefung (30) in mehrere Räume (70, 72, 74) unterteilen, die um die Längsachse (17) herum verteilt sind, wobei die Trennwände (68) umlaufend versetzt zu den Flüssigkeitsverbindungsvorrichtungen (32) angeordnet sind.

6. Hydrodynamisches Lager gemäß einem der Ansprüche 1 bis 3, wobei die Trennvorrichtungen die Vertiefung (30) in mehrere Räume (82) unterteilen, die umlaufend versetzt zu den Flüssigkeitsverbindungsvorrichtungen (32) angeordnet und gleichmäßig um die Längsachse (17) herum verteilt sind, sowie in einen Verteilkanal (84), der jeden Raum (82) mit den Flüssigkeitsverbindungsvorrichtungen (32) verbindet und der einen Umfangsabschnitt (86), der axial auf der gleichen Seite versetzt zu den einzelnen Räumen (82) und zu den Flüssigkeitsverbindungsvorrichtungen (32) angeordnet ist, sowie erste Verbindungsabschnitte (88) umfasst, die jeweils die Räume (82) der Vertiefung mit dem Umfangsabschnitt (86) des Verteilkanals verbinden und die winklig versetzt zu den Umfangsenden (90) der einzelnen Räume angeordnet sind.

7. Hydrodynamisches Lager gemäß Anspruch 6, wobei die Flüssigkeitsverbindungsvorrichtungen (32) axial auf der gleichen Seite des Umfangsabschnitts (86) des Verteilkanals (84) angeordnet sind wie die Räume (82) der Vertiefung (30).

8. Turbomaschine (100), und zwar für ein Luftfahrzeug, das eine Stütze (12), eine Welle (14) und mindestens ein hydrodynamisches Lager (16) gemäß einem der Ansprüche 1 bis 7 umfasst, dessen ringförmige Lageraußenwand (18) fest so mit der Stütze (12) verbunden ist und dessen ringförmige Lagerinnenwand (20) fest so mit der Welle (14) verbunden ist, dass das hydrodynamische Lager (16) an der Führung der sich drehenden Welle (14) beteiligt ist.

9. Turbomaschine gemäß Anspruch 8, wobei die Welle (14) Teil eines Hilfsgeräteantriebs (108) der Turbomaschine ist.

10. Verfahren zum Schmieren eines hydrodynamischen Lagers (16) gemäß einem der Ansprüche 1 bis 7, das Folgendes umfasst:
- mindestens eine Betriebsphase im Übergangszustand, in der zuvor in der Vertiefung (30) gelagertes Schmiermittel (60) mittels Zentrifugalwirkung durch die Flüssigkeitsverbindungsvorrichtungen (32) in den genannten ringförmigen Spalt (22) gepresst wird, und
- eine Betriebsphase im Beharrungszustand, in der durch jede Schmiermittelzuführungsöffnung (24) unter Druck stehendes Schmiermittel in den genannten ringförmigen Spalt (22) geleitet wird und ein Teil des Schmiermittels durch die Flüssigkeitsverbindungsvorrichtungen (32) in die Vertiefung (30) vordringt.

## Claims

1. Hydrodynamic bearing (16) intended to guide a shaft (14) in rotation about a longitudinal axis (17) defined relative to a support (12),
the hydrodynamic bearing comprising a stationary outer annular bearing wall (18) and a rotatable inner annular bearing wall (20) extending opposite the outer annular bearing wall (18) so as to provide an annular space (22) between the inner and outer annular bearing walls (18, 20),
wherein the outer annular bearing wall (18) comprises at least one lubricant supply orifice (24) for supplying pressurised lubricant to said annular space (22) so as to form a load-bearing fluid film,
wherein the hydrodynamic bearing (16) comprises a cavity (30) externally defined by the inner annular bearing wall (20) and axially defined by two transverse annular walls (31A, 31B) secured to the inner annular bearing wall (20) and arranged on both sides of the cavity (30),
the inner annular bearing wall (20) comprising fluid connection means (32) that place the cavity (30) in fluid communication with said annular space (22),
wherein the hydrodynamic bearing (16) further comprises partitioning means (48, 68, 92, 94) connected to the inner annular bearing wall (20) so as to divide the cavity (30) into a plurality of compartments (50, 52, 70, 72, 74, 82), the partitioning means forming an obstacle to a flow of lubricant contained in at least one of the compartments under gravitational force (G), towards the fluid connection means (32), regardless of an angular position of the inner annular bearing wall (20) when the latter is at a standstill, such that the cavity (30) form a lubricant reserve for a transient operating phase.

2. Hydrodynamic bearing according to claim 1, wherein the fluid connection means comprise a plurality of lubricant flow orifices (32) that pass through the inner annular bearing wall (20) and that are regularly distributed about the longitudinal axis (17).

3. Hydrodynamic bearing according to either claim 1 or claim 2, comprising a ring (40) intended to be mounted on the shaft (14) such that it can be removed therefrom, said ring (40) integrating said inner annular bearing wall (20) in addition to said two transverse annular walls (31A, 31B).

4. Hydrodynamic bearing according to any one of claims 1 to 3, wherein the partitioning means comprise a partition wall (48) of annular shape, dividing the cavity (30) into two compartments (50, 52) arranged one behind the other along the longitudinal axis (17), said partition wall comprising at least one opening (54) defined by the inner annular bearing wall (20) and circumferentially offset relative to the fluid connection means (32).

5. Hydrodynamic bearing according to any one of claims 1 to 3, wherein the partitioning means comprise partition walls (68) extending longitudinally from one to the other of said transverse annular walls (31A, 31B), so as to divide the cavity (30) into a plurality of compartments (70, 72, 74) distributed about the longitudinal axis (17), the partition walls (68) being circumferentially offset relative to the fluid connection means (32).

6. Hydrodynamic bearing according to any one of claims 1 to 3, wherein the partitioning means divide the cavity (30) into a plurality of compartments (82) circumferentially offset relative to the fluid connection means (32) and regularly distributed about the longitudinal axis (17), and into a distribution channel (84) connecting each compartment (82) to the fluid connection means (32) and comprising a circumferential portion (86) that is axially offset on a same side relative to each compartment (82) and the fluid connection means (32), in addition to first connection portions (88) that respectively connect the compartments (82) of the cavity to the circumferential portion (86) of the distribution channel and which are angularly offset relative to circumferential ends (90) of each compartment.

7. Hydrodynamic bearing according to claim 6, wherein the fluid connection means (32) are located axially on a same side of the circumferential portion (86) of the distribution channel (84) as the compartments (82) of the cavity (30).

8. Turbomachine (100), in particular for an aircraft, comprising a support (12), a shaft (14) and at least one hydrodynamic bearing (16) according to any of claims 1 to 7, the outer annular bearing wall (18) of which is secured to the support (12) and the inner annular bearing wall (20) of which is secured to the shaft (14), such that the hydrodynamic bearing (16) contributes to the guiding of the shaft (14) in rotation.

9. Turbomachine according to claim 8, wherein the shaft (14) forms a part of an accessory gear box (108) of the turbomachine.

10. Method for lubricating a hydrodynamic bearing (16) according to any of claims 1 to 7, comprising:
- at least one transient operating phase wherein lubricant (60) previously stored in the cavity (30) is injected into said annular space (22) by passing through the fluid connection means (32) under centrifugal force, and
- a steady-state operating phase, wherein pressurised lubricant is supplied to said annular space (22) through each lubricant supply orifice (24), and a part of the lubricant penetrates the cavity (30) through the fluid connection means (32).
